(19) Europäisches Patentamt
European Patent Office
Office européen des brevets

(11) Publication number: **0 604 851 A1**

(12) **EUROPEAN PATENT APPLICATION**

(21) Application number: **93120365.7**

(22) Date of filing: **17.12.93**

(51) Int. Cl.5: **C09K 3/10**, C09D 143/04

(30) Priority: **23.12.92 US 996331**

(43) Date of publication of application: **06.07.94 Bulletin 94/27**

(84) Designated Contracting States: **DE FR GB**

(71) Applicant: **TREMCO INCORPORATED**
**3735 Green Road**
**Beachwood, Ohio 44120(US)**

(72) Inventor: **Hernandez, Pamela K.**
**3342 Arthur Drive**
**Brunswick, Ohio 44120(US)**

(74) Representative: **von Kreisler, Alek, Dipl.-Chem. et al**
**Patentanwälte**
**von Kreisler-Selting-Werner**
**Bahnhofsvorplatz 1 (Deichmannhaus)**
**D-50667 Köln (DE)**

# (54) Alkoxysilane functionalized acrylic polymer composition.

(57) A one-part, moisture curable sealant composition which upon exposure to ambient moisture and at ambient temperature will cure to form a crosslinked silicone-acrylic polymer network includes an alkoxysilane functionalized acrylic polymer, a silanol, and a silane crosslinker. The alkoxy silane functionalized acrylic polymer is the free radical polymerization product of one or more monomers of acrylic or methacrylic acid, or alkyl esters thereof, and at least one other vinyl addition monomer either having an alkoxysilane moiety or having an amino, mercapto, hydroxyl or isocyanato functionality which reacts with a compound having an appropriate reactive functional group and an alkoxysilane moiety. The alkoxysilane functionalized acrylic polymer which is polymerized in a water free environment is mixed with a silanol solution containing hydroxy terminated siloxane polymers and optional polyfunctional silane crosslinkers. The compositions of the invention are useful as caulks, sealants and adhesives and can be used on a variety of substrates including those having glass, metal, ceramic or concrete surfaces.

EP 0 604 851 A1

## FIELD OF THE INVENTION

The present invention relates to a one-part moisture curable composition and more particularly to an alkoxysilane functionalized acrylic polymer which is reacted with a reactive silanol solution in the presence of moisture to form a crosslinked silicone-acrylic hybrid polymer network suitable for use as a caulk, sealant or adhesive.

## BACKGROUND OF THE INVENTION

Silicone sealants are known to exhibit superior performance as compared with other sealants such as polyurethanes, acrylics, acrylic latexes and polysulfides. Advantages of silicone sealants include excellent UV stability and weatherability, the ability to adhere to a wide variety of substrates, high joint movement capability and low temperature flexibility. Silicone sealants, however, are generally more expensive and often tend to stain the substrate to which it is applied. Accordingly, a sealant composition which has all of the advantages of conventional silicon sealants but which is non-staining and less expensive would be highly desirable.

## SUMMARY OF THE INVENTION

It has been discovered that alkoxysilane functionality can be grafted onto an acrylic polymer backbone to produce an alkoxysilane functionalized acrylic polymer which can be reacted with a silanol or silicone polymer through a silanol-alkoxysilane condensation reaction to form a silicone-acrylic hybrid polymer network.

The alkoxysilane functionalized acrylic polymer can be formed by the free radical polymerization of at least one acrylate or methacrylate monomer and at least one vinyl addition monomer having alkoxysilane functionality or having a functional group which will react with a functionalized alkoxysilane.

The alkoxysilane functionalized acrylic polymer can then be reacted with various silanol compounds to form an acrylic resin which is crosslinked through alkoxysilane moieties or through an optional silane crosslinking agent. The resulting crosslinked silicone-acrylic hybrid polymer can be used in sealant, adhesive or coating compositions which exhibit superior weatherability, heat stability, and adhesion to substrates as characteristic of siloxane compositions, while at the same time being nonstaining to substrates and less expensive than typical siloxane compositions.

## DETAILED DESCRIPTION OF THE INVENTION

The alkoxysilane functionalized random acrylic polymer can be made using conventional free radical chain polymerization techniques including bulk, solution and suspension polymerization, with solution polymerization being preferred.

The alkoxysilane functionalized acrylic polymer is formed primarily from one or more acrylate or methacrylate monomers and a minor amount of at least one vinyl addition monomer having alkoxysilane functionality or having a functional group which will react with a functionalized alkoxysilane. For purposes of understanding and interpreting the specification and appending claims, the term "vinyl addition monomer" means, unless otherwise stated, any known free radical polymerizable monomer having ethylenic unsaturation. Optionally, minor amounts of other vinyl addition monomers including vinyl substituted aromatics such as styrene and alpha-methylstyrene, and dienes can be employed.

The acrylate and methacrylate monomers which can be used in the practice of the invention generally include acrylic acid, methacrylic acid and alkyl esters thereof wherein the alkyl portion contains from 1 to about 12 carbon atoms and preferably from 1 to about 6 carbon atoms. Representative examples of acrylate and methacrylate monomers include acrylic or methacrylic acid esters of alcohols such as methanol, ethanol, 1-propanol, 2-propanol, 1-butanol, 2-methyl-1-propanol, 1-pentanol, 2-pentanol, 3-pentanol, 2-methyl-1-butanol, 3-methyl-1-butanol, 2-hexanol, 2-methyl-1-pentanol, 3-methyl-1-pentanol, cyclohexanol, 2-ethyl-1-butanol, 3-heptanol, benzyl alcohol, 2-octanol, 6-methyl-1-heptanol, 2-ethyl-1-hexanol, 3,5-dimethyl-1(-hexanol, 4,5-dimethyl-a-hexanol, 3,4-dimethyl-1-hexanol, 3-methyl-1-heptanol, 5-methyl-1-heptanol, 3,5,5-trimethyl-1-hexanol, 1-decanol, 1-dodecanol, and the like. Particularly preferred acrylates for use with the invention are ethyl acrylate and butyl acrylate. Methacrylates are generally utilized, if at all, as a comonomer with the other acrylic monomers and generally constitute up to as much as 10 percent and preferably up to 7 percent by weight of all monomers utilized in the polymerization of the functionalized acrylic polymer. The total amount of acrylate and methacrylate monomer utilized to form the alkoxysilane

functionalized acrylic polymer is generally in the range between 80 and 99 weight percent and more preferably in the range between 90 and 99 weight percent based on the total weight of all monomers used to form the polymer.

An essential aspect of the invention is that at least one vinyl addition monomer having alkoxysilane functionality or having a functional group which will react with a functionalized alkoxysilane compound is utilized in the free radical chain polymerization of the functionalized acrylic polymer of the invention. The alkoxy functionalized vinyl addition monomers or the vinyl additional monomer having a functional group which will react with a functionalized alkoxysilane compound are generally utilized in small quantities ranging from about 1 percent to about 10 percent and preferably from about 2 percent to about 4 percent, by weight, of all monomers utilized in the polymerization of the functionalized acrylic polymer.

Vinyl addition monomers having alkoxysilane functionality which can be used in practicing the invention include those represented by the formula:

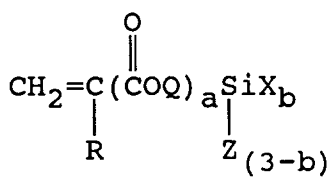

where R is hydrogen or methyl, Q is an alkylene radical, a is 0 or 1, X is an alkoxy group having from 1 to about 4 carbon atoms, Z is a monovalent hydrocarbon radical free of aliphatic unsaturation and having from 1 to about 7 carbon atoms, and b is 1, 2 or 3. Specific examples of vinyl addition monomers having alkoxysilane functionality which can be used include vinyltriethoxysilane, vinyltrimethoxysilane, vinyldimethylethoxysilane, vinylmethyldiacetoxysilane, vinyltriacetoxysilane, and vinytriisopropoxysilane.

Vinyl addition monomers having a functional group which will react with a functionalized alkoxysilane and which can be used in practicing the invention include those represented by the formula:

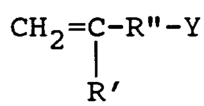

where R' is hydrogen or methyl, R" is a divalent hydrocarbon radical free of aliphatic unsaturation and having from 1 to 12 carbon atoms, and Y is an isocyanato group, an amino group, a hydroxyl group or a mercapto group. Suitable compounds include, among others, alkylenes, aromatics and alkyl substituted aromatics. Specific examples of vinyl addition monomers having a functional group which will react with a functionalized alkoxysilane include m-isopropenyl-α,α-dimethyl benzylisocyanate and isocyanatoethylmethacrylate with m-isopropenyl-α,α-dimethylbenzylisocyanate being preferred.

In addition to the acrylate and methacrylate monomers and the alkoxysilane functionalized, or isocyanato, hydroxyl or mercapto functionalized monomers, minor amounts of other vinyl addition monomers can optionally be employed to modify the polymer as desired. Such modifying comonomers include various vinyl substituted aromatics having from about 8 to about 12 carbon atoms including styrene, styrene with ring substituted methyl or chloro groups, alpha-methyl styrene and the like; various mono-olefins having from 2 to about 6 carbon atoms such as 1-butylene, 2-butylene and the like; and acrylonitrile. Modifying monomers may be utilized in amounts ranging up to about 19 percent by weight of all monomers utilized in the polymerization of the functionalized acrylic polymer.

While various known techniques can be employed to polymerize the alkoxysilane, isocyanato, amino, mercapto or hydroxyl functionalized acrylic polymer, it is preferably made by solution polymerization in an organic solvent. Suitable solvents which can be employed in the free radical polymerization of the functionalized acrylic polymer include any organic liquid which is inert to the reactants and products and which will not otherwise adversely affect the reaction. Examples of suitable solvents include toluene, benzene, xylene, hexane, heptane, n-octane, isooctane, ethyl acetate, acetone, methyl ethyl ketone, and mixtures thereof. The preferred solvents include toluene and xylene and mixtures thereof.

The amount of organic solvent used is usually readily determinable by those skilled in the art, is dependent on such factors as viscosity and the desired molecular weight of the polymer, and is generally in the range from about 10 parts by weight to 30 parts by weight, and preferably from 15 parts by weight to 20 parts by weight, per 100 parts by weight of total monomer employed.

While free radical chain polymerization of the acrylate, methacrylate, functionalized vinyl addition monomers and optional modifying ethylenically unsaturated monomers can be initiated by electromagnetic radiation such as light, electron rays, etc., it is usually achieved by use of free radical polymerization catalysts such as organic peroxide initiators such as benzoyl peroxide, substituted benzoyl peroxides, acetyl peroxides, lauryl peroxides, t-butyl hydroperoxide, di-t-butyl peroxide; peresters such as t-butyl peroxypivalate, azo-type initiators such as azobisisobutylonitrile and 1,1-azobiscyclohexane carbonitrile, persulfates such as sodium, potassium or ammonium persulfate, peroxyphosphates such as sodium, potassium or ammonium peroxy phosphate and t-amyl peroxy initiator such as t-amyl peroxy-2-ethyl hexanoate, and ethyl-3,3-di-t-amyl peroxy-butyrate. Free radical catalysts or initiators are generally used in amounts from .1 to 2 and preferably from .75 to 1 parts by weight based on 100 parts by weight total monomer.

The free radical solution polymerization used to obtain the functionalized acrylic polymers of the invention are generally carried out in a water free or substantially water free environment, in the presence of a suitable free radical polymerization catalyst at or near normal atmospheric pressure, and at a suitable temperature above the dissociation temperature of the free radical forming catalyst and below the decomposition temperature of the polymer which is to be formed. Suitable reaction temperatures are generally in the range from about 40°C to about 150°C and preferably from 110°C to 135°C, and are, along with reaction time, initiators, solvents and other polymerization conditions, readily determinable by those skilled in the relevant arts.

The functionalized acrylic polymers of the invention generally have a weight average molecular eight of from about 20,000 to about 80,000 and preferably from about 45,000 to about 60,000, and a Tg in the range from -50°C to -10°C and preferably from -35°C to -20°C

The alkoxysilane functionalized acrylic polymers are generally directly added to or directly blended with a reactive silanol solution as described hereinafter.

The isocyanato, mercapto, amino, or hydroxyl functionalized acrylic polymers are reacted with a functionalized alkoxysilane compound to form an alkoxysilane functionalized acrylic polymer. Generally, it is preferred that the acrylic polymer have only one type of functionality, i.e. all functional groups of the polymer are preferably either isocyanato, mercapto, amino or hydroxyl groups, with isocyanato functionality being most preferred. If the functional groups on the polymer are isocyanato groups then the functional group of the alkoxysilane with which the polymer is reacted can be an isocyanato, a mercapto, an amino, or a hydroxyl functional group, with amino-alkoxysilanes being preferred and with $\gamma$-aminopropyl-triethoxy silane being most preferred. Also, the isocyanato functionalized acrylic polymers can be reacted with a mixture of alkoxysilanes each having either an isocyanato, a mercapto, an amino, or a hydroxyl functional group. If the functional groups on the acrylic polymer are mercapto, amino or hydroxyl functional groups then the functionalized alkoxysilane must have an isocyanate group to react with the functional groups on the polymer to form an alkoxysilane functionalized acrylic polymer. The reaction of the functionalized acrylic polymer with a functionalized alkoxysilane to form the alkoxysilane functionalized polymer is carried out in a water free or substantially water free environment, and is generally carried out at about room temperature and in the same solvent used to polymerize the acrylic polymer. The amount of function-alized alkoxysilane which is utilized in conjunction with the isocyanato, mercapto, amino, or hydroxyl functional and acrylic polymers is generally an amount, in moles, slightly in excess of the moles of functionalized vinyl additional monomer used in forming the polymer.

The alkoxysilane functionalized acrylic polymer which is formed either by directly incorporating an ethylenically unsaturated addition monomer having alkoxysilane functionality into the acrylic polymer during the free radical polymerization thereof or by incorporating a hydroxyl, amino, mercapto or isocyanato functionalized ethylenically unsaturated addition monomer into the acrylic polymer during the free radical polymerization thereof and subsequently reacting the functionalized acrylic polymer with a functionalized alkoxysilane, is added to or otherwise mixed or blended with a substantially water free reactive silanol solution to form a composition which when exposed to moisture reacts or cures to form a crosslinked silicone-acrylic hybrid polymer.

The reactive silanol solution is a liquid mixture of hydroxy terminated siloxane polymers, nonreactive silicone polymers and polyfunctional silane crosslinkers which are generally tri- or tetrafunctional silanes, or a mixture of both, which upon exposure to moisture hydrolyze and react either with the hydroxyl groups of the reactive silicone polymer molecules, with the alkoxysilane groups of the alkoxysilane functionalized acrylic polymer molecules through a silanol-alkoxysilane condensation cure mechanism to form the cured or crosslinked silicone-acrylic hybrid polymer, or with both. The amount of reactive silicone polymer in the silanol solution before being combined with the alkoxysilane functionalized acrylic polymer is generally from about 30 to about 90 percent by weight, the amount of nonreactive silicone polymer is generally in the

range from about 5 to about 50 percent by weight, and the amount of crosslinker is generally in excess of the amount required to react with each of the alkoxysilane functionalities of the acrylic polymer, and in the range up to about 20 percent, and preferably in the range from about 5 percent to about 15 percent of the weight of the silanol solution.

The reactive silicone polymers are generally represented by the formula:

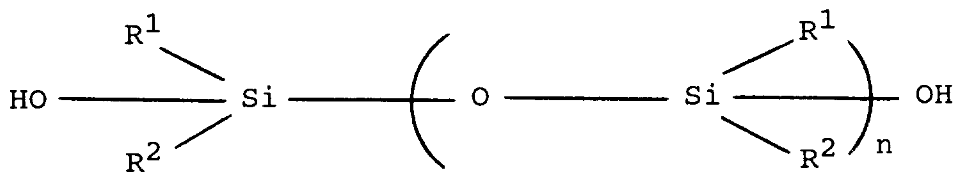

wherein $R^1$ and $R^2$ are aliphatic groups, desirably alkyl groups, having from 1 to 18 carbon atoms and preferably 1 to 8 carbon atoms with methyl being preferred. The nonreactive silicone polymers are generally represented by a formula similar to that of the reactive silicone polymers except that aliphatic groups, desirably alkyl groups, having from 1 to 18 carbon atoms are substituted for the terminal hydrogens. The number of recurring units, represented by n, is such that the silicone polymers in the silanol solution generally have a viscosity of from about 10,000 cps to about 300,000 cps, and preferably from about 20,000 cps to about 110,000 cps.

The silane crosslinkers are generally silanes having 3 or 4 hydrolyzable groups including halogen atoms such as chlorine or bromine; alkoxy groups such as methoxy or ethoxy; acyloxy groups such as acetoxy or propionoxy; ketoxime groups such as dimethyl ketoximo groups; and the like. Oxime crosslinkers, and in particular methyl oximo silane and methylethyloximosilane, are preferred.

Suitable conventional adhesion promoters and fillers may be employed as desired. The amounts and particular adhesive promoters and fillers which may be used to achieve a desired result are well known and readily determinable by those skilled in the art.

Conventional curing catalyst for the condensation of silanol groups can be employed with the invention to accelerate the cure or reaction of the alkoxysilane functionalized acrylic polymer with the reactive hydroxy terminated siloxane polymers upon exposure of the acrylic polymer and silicone polymer mixture to moisture. Suitable catalysts are well known to the art and literature and generally include alkali phenoxides and derivatives thereof, amines such as sec-butylamine, hydrazine, aniline, pyridine, etc., the condensation products of an aliphatic aldehyde and an aliphatic primary amine, carboxylic acid salts of metals such as lead, tin, nickel, cobalt, iron, cadmium, chromium, zinc, etc., and organic titanium ester compounds such as tetraethyl titanate, tetraisopropyl titanate, etc. The foregoing list of catalysts is for illustrative purposes only and is not meant to exclude other suitable known catalysts.

Curing catalysts when used are typically employed in amounts ranging from .01 to 1 parts by weight based on total weight of reactive silanol formulation including any fillers or additives.

The alkoxysilane functionalized acrylic polymer along with the solvent in which the polymer was polymerized is mixed or blended in any conventional manner with the reactive silanol solution in the absence of water to produce a moisture curable composition which when exposed to moisture forms a crosslinked silicone-acrylic hybrid polymer which can be used as an adhesive, caulk or sealant and which has excellent UV stability and weatherability, is capable of strongly adhering over a wide temperature range to a variety of substrate surfaces such as glass, metal, ceramic and concrete, and which is less expensive to produce and does not tend to stain the substrate to which it is applied. The moisture curable composition of the invention thus has advantages similar to siloxane adhesive and sealant compositions while overcoming the disadvantages thereof.

The aforementioned additives including curing catalysts, fillers and adhesion promoters, as well as other desirable conventional additives such as plasticizers and coloring agents may be added to either the acrylic polymer solution or to the silanol solution either before or after mixing the silanol solution with the polymer solution. The one part, moisture curable compositions of the invention can be stored in various conventional containers which are suitably airtight and moisture-resistant. Compositions in accordance with the invention are generally used by applying the composition to a substrate whereupon ambient moisture causes the alkoxysilane functionalized acrylic polymer to crosslink with the silanol polymers via the silane crosslinkers.

Silicone-acrylic hybrid polymers in accordance with the invention having desirable properties can be produced by combining the described silanol solutions and acrylic polymer solutions in various ratios.

Preferably the solutions are selected and combined so that the weight ratio of acrylic polymer to reactive silicone polymer is in the range from about 0.1:1 to 10:1, preferably in the range from about 0.3:1 to 5:1, and more desirably in the range from about 0.5:1 to 2:1.

The following examples are illustrative only and should not be construed as limiting the invention, which is properly delineated in the appended claims.

Acrylic Polymer

An isocyanate functionalized acrylic polymer in accordance with the invention was prepared as follows.

A 1 liter, 4 neck round bottom flask was equipped with a Dean-Stark trap, water cooled condenser, Claisen adapter, thermometer, pressure equalizing addition funnel, stir shaft with Teflon blade and nitrogen inlet/outlet. To the flask, 70 grams toluene was precharged to the flask and heated to reflux with mechanical agitation under nitrogen atmosphere. Upon reflux, the reagent charge was added dropwise through the addition funnel over a 2.5 to 3 hour period to the toluene. The reagent charge contained 2.13 grams (0.009 moles) dodecyl mercaptan (chain transfer agent), 6.4 grams Vazo 88 (1,1'-azobiscyclohexane carbonitrile) free radical initiator and also acrylate/m-TMI monomer as indicated in Table I. During monomer addition the temperature steadily increased and was held at 125°C until monomer addition was complete. The temperature was then increased and maintained at 135°C. Scavenger catalyst containing 2.12 grams Lupersol 533M75 (ethyl 3,3 di-(tertiary amyl peroxy)butyrate) dissolved in 5 grams toluene was added dropwise via the addition funnel over an approximately 30 minute period. After scavenger addition was complete, the viscous polymer solution was heated at 135°C for an additional 2 hours, then cooled and transferred to a storage container. The monomer charge for each experiment is provided in Table I.

TABLE I

MONOMER CHARGE

| Ex. | Ethyl Acrylate gms[1] | Ethyl Acrylate (moles) | Butyl Acrylate gms[1] | Butyl Acrylate (moles) | m-TMI gms[1] | m-TMI (moles) | EtAc/BuAc/m-TMI wt. ratio |
|---|---|---|---|---|---|---|---|
| 1 | 418.3 | (4.18) | --- | | 8.5 | (0.042) | 100/0/2 |
| 2 10 | 334.6 | (3.34) | 83.3 | (0.66) | 8.5 | (0.042) | 80/20/2 |
| 3 | 208.3 | (2.08) | 208.3 | (1.64) | 8.5 | (0.042) | 50/50/2 |
| 4 | 83.7 | (0.84) | 416.6 | (3.28) | 8.5 | (0.042) | 20/80/2 |

To 150g of the acrylic polymer was added 2.8g $\gamma$-aminopropyl-triethoxy silane which was reacted with the polymer at room temperature in the absence of water for a period of 30 to 60 minutes to produce a triethoxysilane functionalized acrylic polymer.

Example 1

To a conventional reactive silanol solution was added the above triethoxysilane functionalized acrylic polymer in accordance with the amounts shown in Table II. The conventional reactive silanol solution was a medium modulus silicone sealant intended for glazing and perimeter caulking applications and having the following composition:

| | | |
|---|---|---|
| 29.7 | phr - reactive silicone (silanol) fluid | |
| 19.8 | phr - nonreactive silicone fluid | |
| 0.99 | phr - adhesion promoter | |
| 4.9 | phr - oxime crosslinker | |
| 0.99 | phr - stabilizer (silicone) | |
| 39.6 | phr - talc ($caco_3$) | filler |
| 4 | phr - silica | |
| 0.1 | phr - tin catalyst | |

Polymer sheets were prepared from the above acrylic polymer-silanol mixture by pouring the mixture and spreading to a thickness of about 0.25 inch thickness. The polymer sheets were cured at room temperature and at 50 percent relative humidity for a period of 21 days, whereupon the mechanical properties of the sheets were evaluated. The results are shown in Table II.

TABLE II

| Wt. % Acrylic | MW Acrylic (g/mole) | Tp(psi) | %EP | TB(psi) | %Eb | 100% modulus (psi) |
|---|---|---|---|---|---|---|
| 0 | -- | 86 | 1010 | 86 | 1015 | 23.5 |
| 10 | 10100 | 68 | 700 | 67 | 720 | 23 |
| 20 | 10100 | 65 | 830 | 64 | 860 | 23 |
| 30 | 10100 | 46 | 500 | 44 | 530 | 21 |
| 40 | 10100 | 52 | 560 | 51 | 590 | 20.0 |
| 50 | 10100 | 43 | 400 | 42 | 420 | 19.0 |
| 100 | 10100 | 83.2 | 305 | 82.7 | 310 | 23.5 |

As seen in Table II, incorporation of acrylic into the silicone network resulted in a decrease in both tensile strength and elongation. A slight decrease in modulus was observed. The sheets formed from compositions comprising 30 percent or more acrylic polymer by weight exhibited the greatest effect on tensile and elongation. Table III illustrates the effect of acrylic concentration on cure rate.

TABLE III

| Wt. % Acrylic | MW Acrylic (g/mole) | 24 hrs. | 7 days | 14 days | 21 days | 28 days | 35 days |
|---|---|---|---|---|---|---|---|
| 0 | -- | 4 | 20 | 22 | 22 | 23 | 23 |
| 10 | 10100 | 1 | 18 | 21 | 23 | 23 | 22 |
| 20 | 10100 | 0 | 18 | 21 | 21 | 20 | 21 |
| 30 | 10100 | 0 | 15 | 20 | 20 | 20 | 20 |
| 40 | 10100 | 1 | 15 | 17 | 22 | 25 | 21 |
| 50 | 10100 | 0 | 13 | 15 | 19 | 25 | 20 |
| 100 | 10100 | 12 | 20 | 26 | 24 | 30 | 30 |

For compositions comprising 30 percent or more acrylic polymer by weight, the cure rate initially appeared too slow; however, by 14-21 days, cure rate was comparable for all silicone-acrylic compositions.

Example 2

The triethoxysilane functionalized acrylic polymer was similarly incorporated into another conventional reactive silanol solution which was a high modulus silicone sealant intended for glazing application and having the following composition:

60.4 phr - reactive silanol fluid
5.1 phr - nonreactive silicone fluid
4.3 phr - oxime crosslinker
3.1 phr - silicone stabilizer
7.3 phr - fumed silica )
19.7 phr - talc ) filler
0.14 phr - expancel )
0.05 phr - tin catalyst

Mechanical and cure properties were obtained as described for Example 1. Table IV illustrates the effect of acrylic on mechanical properties.

TABLE IV

| Wt. % Acrylic | Tp(psi) | %Ep | $T_B$(psi) | %$E_B$ | 100% Modulus (psi) |
|---|---|---|---|---|---|
| 0 | 226 | 350 | 221 | 360 | 63 |
| 10 | 147 | 280 | 147 | 280 | 66 |
| 20 | 145 | 440 | 144 | 440 | 56 |
| 30 | 134 | 470 | 134 | 470 | 53 |
| 40 | 117 | 470 | 116 | 480 | 61 |
| 50 | 89 | 390 | 84 | 400 | 53 |
| 100 | 83.2 | 305 | 82.7 | 310 | 23.5 |

As the concentration of acrylic increased, tensile strength decreased and elongation tended to increase. Modulus was only slightly affected by higher concentrations of acrylic. Cure development is exhibited in Table V for the high modulus silicone acrylic hybrid compositions.

TABLE V

| Wt. % Acrylic* | 24 hrs. | 7 days | 14 days | 21 days | 28 days | 35 days |
|---|---|---|---|---|---|---|
| 0 | 36(3)* | 40 | 43 | 44 | 45 | 43 |
| 10 | 0 | 37 | 43 | 44 | 43 | 43 |
| 20 | 0 | 37 | 42 | 40 | 42 | 42 |
| 30 | 25(3)* | 38 | 37 | 40 | 42 | 41 |
| 40 | 21(3)* | 35 | 37 | 37 | 41 | 40 |
| 50 | 20(3)* | 30 | 35 | 37 | 40 | 40 |
| 100 | 12 | 20 | 26 | 24 | 30 | 30 |

* determined at 3 days instead of 24 hours.

As the acrylic component increased, Shore A decreased. This is readily evident in the first 7 days of cure. However, by 28-35 days cure is nearly that of the silicone control.

Silicones are known for their excellent UV stability/weatherability characteristics. The conventional silanol solutions (silicone sealant controls) and hybrid sealant compositions were subjected to intense UV light, heat and humidity cycles. The medium modulus silicone sealant and a 50/50 medium modulus silicon-acrylic hybrid sealant were subjected to these conditions. After more than 6,000 hrs. exposure, the 50/50 hybrid weathered as well as the control. The high modulus silicone sealant and hybrids containing 20-50 weight percent acrylic also were exposed to these severe conditions. After more than 6,000 hrs., all hybrids

exhibited no detectable surface deterioration as compared to the control.

In construction sealant applications, sealants must meet several stringent criteria, one of which is movement capability as according to ASTM C920. Silicones are known for their superior joint movement capability ranging from ± 25 percent to +100/-50 percent. The medium modulus sealant (control) used is classified as ± 50 percent movement. For a cured medium modulus silicone, a 50/50 hybrid and a 70/30 hybrid, Dynamic Mechanical Analysis was used to characterize rheological behavior. Table VI illustrates the effect of G' as a function of temperature. Tables 2 and 3 also illustrate G" and tan delta as a function of temperature. Both G' and G" remain fairly constant over the low temperature range for both the 50/50 hybrid and the 70/30 hybrid as compared to the silicone control. This data suggests that the hybrid compositions demonstrate similar movement capability at low temperature as the control and ±50 percent movement capability is possible with these sealant hybrid compositions. Morphology as demonstrated by microscopy reveal that silicone domains are well dispersed throughout an acrylic continuous phase.

TABLE VI

| STORAGE MODULUS, G' (dynes/$cm^2$) at 0.5 Percent Strain and 1 rad/sec. | | | |
|---|---|---|---|
| Temp. (°C) | Silicone | 50/50 Hybrid | 70/30 Hybrid |
| - 150 | $2 \times 10^{10}$ | $2.2 \times 10^{10}$ | $2.2 \times 10^{10}$ |
| - 120 | $1.3 \times 10^{10}$ | $1.1 \times 10^{10}$ | $1.5 \times 10^{10}$ |
| - 100 | $1.0 \times 10^{10}$ | $1.05 \times 10^{10}$ | $9.2 \times 10^{9}$ |
| - 80 | $9.9 \times 10^{9}$ | $1.0 \times 10^{10}$ | $8.0 \times 10^{9}$ |
| - 60 | $9.9 \times 10^{9}$ | $1.0 \times 10^{10}$ | $7.0 \times 10^{9}$ |
| - 40 | $1.0 \times 10^{9}$ | $2.0 \times 10^{7}$ | $9.5 \times 10^{5}$ |
| - 30 | $7.0 \times 10^{6}$ | $1.2 \times 10^{7}$ | $2.0 \times 10^{5}$ |
| 0 | -------- | $8.0 \times 10^{6}$ | ---------- |
| 25 | $3.8 \times 10^{6}$ | $6.2 \times 10^{6}$ | ---------- |
| 50 | $3.4 \times 10^{6}$ | $6.4 \times 10^{6}$ | ---------- |
| 75 | $2.7 \times 10^{6}$ | $6.4 \times 10^{6}$ | ---------- |
| 100 | $2.1 \times 10^{6}$ | $6.6 \times 10^{6}$ | ---------- |
| 125 | $1.7 \times 10^{6}$ | $6.2 \times 10^{6}$ | ---------- |

TABLE VII

| LOSS MODULUS, G' (dynes/$cm^2$) at 0.5 Percent Strain and 1 rad/sec. | | | |
|---|---|---|---|
| Temp. (°C) | Silicone | 50/50 Hybrid | 70/30 Hybrid |
| - 150 | $7.0 \times 10^{8}$ | $6.0 \times 10^{8}$ | $3.5 \times 10^{8}$ |
| - 120 | $9.2 \times 10^{9}$ | $7.0 \times 10^{8}$ | $7.0 \times 10^{8}$ |
| - 100 | $3.5 \times 10^{8}$ | $6.5 \times 10^{8}$ | $2.9 \times 10^{8}$ |
| - 80 | $4.5 \times 10^{8}$ | $5.5 \times 10^{8}$ | $2.6 \times 10^{8}$ |
| - 60 | $5.0 \times 10^{8}$ | $8.0 \times 10^{8}$ | $3.0 \times 10^{8}$ |
| - 40 | $2.0 \times 10^{8}$ | $1.9 \times 10^{7}$ | $7.2 \times 10^{7}$ |
| - 30 | $8.0 \times 10^{6}$ | $7.8 \times 10^{6}$ | $3.2 \times 10^{6}$ |
| 0 | --------- | --------- | ---------- |
| 25 | $3.8 \times 10^{6}$ | $6.2 \times 10^{6}$ | ---------- |
| 50 | $3.4 \times 10^{6}$ | $6.4 \times 10^{6}$ | ---------- |
| 75 | $2.7 \times 10^{6}$ | $6.4 \times 10^{6}$ | ---------- |
| 100 | $2.1 \times 10^{6}$ | $6.6 \times 10^{6}$ | ---------- |
| 125 | $1.7 \times 10^{6}$ | $6.2 \times 10^{6}$ | ---------- |

TABLE VIII

| Tan delta, S, at 0.5% Strain and 1 rad/sec. | | | |
|---|---|---|---|
| Temp. (°C) | Silicone | 50/50 Hybrid | 70/30 Hybrid |
| - 150 | $3.5 \times 10^{-2}$ | $2.7 \times 10^{-2}$ | $1.6 \times 10^{-2}$ |
| - 120 | $7.1 \times 10^{-1}$ | $6.4 \times 10^{-2}$ | $4.7 \times 10^{-2}$ |
| - 100 | $3.5 \times 10^{-2}$ | $6.2 \times 10^{-2}$ | $3.2 \times 10^{-2}$ |
| - 80 | $4.5 \times 10^{-2}$ | $5.5 \times 10^{-2}$ | $3.3 \times 10^{-2}$ |
| - 60 | $5.1 \times 10^{-2}$ | $8.0 \times 10^{-2}$ | $4.3 \times 10^{-2}$ |
| - 40 | $2.0 \times 10^{-1}$ | $9.5 \times 10^{-1}$ | $7.6 \times 10^{1}$ |
| - 30 | 1.1 | $6.5 \times 10^{-1}$ | $1.6 \times 10^{1}$ |
| 0 | -------- | --------- | ---------- |
| 25 | $3.3 \times 10^{-1}$ | 1.0 | ---------- |
| 50 | $3.3 \times 10^{-1}$ | 1.0 | ---------- |
| 75 | $3.1 \times 10^{-1}$ | 1.0 | ---------- |
| 100 | $3.0 \times 10^{-1}$ | 1.0 | ---------- |
| 125 | $2.74 \times 10^{-1}$ | 1.0 | ---------- |

Another advantage of the silicone-acrylic hybrid is longer skin over time (SOT) and tack free time (TFR). The conventional medium modulus silicone sealant is much too fast and difficult to tool.

| Sample | SOT | TFT (min) |
|---|---|---|
| Medium modulus silicone sealant | 10 | 20 |
| 50/50 silicone-acrylic Hybrid | 30 | 240 |
| Acrylic | 240 | 720 |

Movement capability was recently determined as compared to the medium modulus silicone sealant and the acrylic controls. Movement capability was determined according to the truncated c920 ASTM standard (3 week cure at room temperature/relative humidity) since all silicones are tested in this fashion. The test was run for 10 cycles at room temperature. The results are as follows:

| Sample | Substrate | 25% | 35% | 50% |
|---|---|---|---|---|
| Medium Modulus Silicone Sealant | glass | passed | passed | passed |
| Acrylic Silicone-Acrylic Hybrid | glass | passed | ---- | failed |
| 50/50 Silicone-Acrylic Hybird | glass | passed | passed | passed |

The two conventional sealants are Poly(dimethylsiloxane) oligomers. All silicone sealants containing a reactive silanol end group or an alkoxysilyl end group would be able to incorporate this chemistry.

While in accordance with the Patent Statutes, the best mode and preferred embodiment has been set forth, the scope of the invention is not limited thereto, but rather by the scope of the attached claims.

## Claims

**1.** A moisture curable sealant composition comprising an alkoxysilane functionalized acrylic polymer, a reactive silanol solution containing reactive silicone and, optionally, a silane crosslinker.

**2.** A composition in accordance with claim 1, wherein the alkoxysilane functionalized acrylic polymer is the free radical polymerization product of:

a) one or more monomers selected from the group consisting of acrylic acid, methacrylic acid, alkyl esters of acrylic acid, and alkyl esters of methacrylic acid;

b) at least one vinyl addition monomer having an alkoxysilane moiety; and optionally

c) one or more other vinyl addition monomers selected from the group consisting of vinyl substituted aromatics and monoolefins.

**3.** A composition in accordance with claim 2, wherein the at least one vinyl addition monomer having an alkoxysilane moiety is represented by the formula

$$CH_2=\underset{\displaystyle R}{\underset{|}{C}}(COQ)_a\underset{\displaystyle Z_{(3-b)}}{\underset{|}{Si}}X_b$$

where R is hydrogen or methyl, Q is an alkylene radical, a is 0 or 1, X is an alkoxy group having from 1 to about 4 carbon atoms, Z is a monovalent hydrocarbon radical free of aliphatic unsaturation and having from 1 to about 7 carbon atoms, and b is 1, 2 or 3.

**4.** A composition in accordance with claim 1, wherein the alkoxysilane functionalized acrylic polymer is the reaction product of an isocyanato functionalized acrylic polymer and a compound having an alkoxysilane moiety and an isocyanto, mercapto, amino or hydroxyl functional group, and wherein the isocyanato functionalized acrylic polymer is the free radical polymerization product of:
a) one or more monomers selected from the group consisting of acrylic acid, methacrylic acid, alkyl esters of acrylic acid, and alkyl esters of methacrylic acid;
b) at least one vinyl addition monomer having an isocyanato group; and optionally
c) one or more other vinyl addition monomers selected from the group consisting of vinyl substituted aromatics and mono-olefins.

**5.** A composition in accordance with claim 4, wherein the at least one vinyl addition monomer having an isocyanato group is m-isopropenyl-$\alpha$,$\alpha$-dimethyl benzylisocyanate or isocyanatoethyl-methacrylate.

**6.** A composition in accordance with claim 1, wherein the alkoxysilane functionalized acrylic polymer is the reaction product of an amino, hydroxyl or mercapto functionalized acrylic polymer and a compound having an alkoxysilane moiety and an isocyanato functional group, and wherein the amino, hydroxyl or mercapto functionalized acrylic polymer is the free radical polymerization product of:
a) one or more monomers selected from the group consisting of acrylic acid, methacrylic acid, alkyl esters of acrylic acid, and alkyl esters of methacrylic acid;
b) at least one vinyl addition monomer having an amino, hydroxyl or mercapto group; and optionally
c) one or more other vinyl addition monomers selected from the group consisting of vinyl substituted aromatics and monoolefins.

**7.** The moisture cured composition of claim 1, wherein the alkoxysilane functionalized acrylic polymer is the free radical polymerization product of:
a) one or more monomers selected from the group consisting of acrylic acid, methacrylic acid, alkyl esters of acrylic acid, and alkyl esters of methacrylic acid;
b) at least one vinyl addition monomer having an alkoxysilane moiety; and optionally
c) one or more other vinyl addition monomers selected from the group consisting of vinyl substituted aromatics and monoolefins.

**8.** The moisture cured composition of claim 1, wherein the alkoxysilane functionalized acrylic polymer is the reaction product of an isocyanato functionalized acrylic polymer and a compound having an alkoxysilane moiety and an isocyanto, mercapto, amino or hydroxyl functional group, and wherein the isocyanato functionalized acrylic polymer is the free radical polymerization product of:
a) one or more monomers selected from the group consisting of acrylic acid, methacrylic acid, alkyl esters of acrylic acid, and alkyl esters of methacrylic acid;
b) at least one vinyl addition monomer having an isocyanato group; and optionally
c) one or more other vinyl addition monomers selected from the group consisting of vinyl substituted aromatics and mono-olefins.

**9.** The cured composition of claim 8, wherein the at least one vinyl addition monomer having an isocyanato group is m-isopropenyl-$\alpha$,$\alpha$-dimethyl benzylisocyanate or isocyanatoethyl-methacrylate, and wherein the compound having an alkoxysilane moiety and an isocyanato, mercapto, amino or hydroxyl functional group is $\gamma$-aminopropyl-trimethoxy silane.

**10.** The moisture cured composition of claim 1, wherein the alkoxysilane functionalized acrylic polymer is the reaction product of an amino, hydroxyl or mercapto functionalized acrylic polymer and a compound having an alkoxysilane moiety and an isocyanato functional group, and wherein the amino, hydroxyl or mercapto functionalized acrylic polymer is the free radical polymerization product of:

a) one or more monomers selected from the group consisting of acrylic acid, methacrylic acid, alkyl esters of acrylic acid, and alkyl esters of methacrylic acid;

b) at least one vinyl addition monomer having an amino, hydroxyl or mercapto group; and optionally

c) one or more other vinyl addition monomers selected from the group consisting of vinyl substituted aromatics and monoolefins.

European Patent Office

# EUROPEAN SEARCH REPORT

Application Number
EP 93 12 0365

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 295 702 (UNION CARBIDE CORPORATION)<br>* page 3, line 15 - page 4, line 6 *<br>* page 4, line 23 - page 5, line 5 *<br>* claim 1 *<br>--- | 1-3,7 | C09K3/10<br>C09D143/04 |
| A | EP-A-0 330 234 (DOW CORNING CORPORATION)<br>* page 5, line 5 - line 24 *<br>* page 5, line 30 - line 37; claim 1 *<br>--- | 1-3,7 | |
| A | EP-A-0 419 669 (KANEGAFUCHI KAGAKU KOGYO)<br>* page 7, line 33 - line 36 *<br>* page 7, line 53 - page 8, line 13 *<br>* claim 1 *<br>--- | 1-3 | |
| A | FR-A-2 405 742 (MITSUBISHI CHEMICAL INDUSTRIES)<br>* page 5, line 24 - line 25 *<br>* claims 1,3,4,9; examples 1-7 *<br>--- | 1 | |
| A | DATABASE WPI<br>Week 9141,<br>Derwent Publications Ltd., London, GB;<br>AN 91-298811<br>& JP-A-3 197 548 (KANEGAFUCHI CHEM KK)<br>* abstract *<br>--- | 1 | TECHNICAL FIELDS SEARCHED (Int.Cl.5)<br>C09K<br>C09D<br>C08L |
| A | EP-A-0 368 500 (DOW CORNING CORPORATION)<br>* the whole document *<br>----- | 1 | |

The present search report has been drawn up for all claims

| Place of search | Date of completion of the search | Examiner |
|---|---|---|
| THE HAGUE | 25 March 1994 | Puetz, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)